# EUROPEAN PATENT SPECIFICATION

(11) **EP 2 953 014 B1**
(45) Date of publication and mention of the grant of the patent: **27.02.2019**
(21) Application number: 14745967.1
(22) Date of filing: 31.01.2014
(51) Int. Cl.: G06F 3/0346, G06F 15/02, G06F 3/0488, G06F 3/0483, G06F 3/0484

(54) **DOCUMENT BROWSING DEVICE, METHOD FOR TURNING OVER PAGES OF ELECTRONIC DOCUMENT, AND PROGRAM**
DOKUMENTENDURCHSUCHUNGSVORRICHTUNG, VERFAHREN ZUM UMDREHEN VON SEITEN ELEKTRONISCHER DOKUMENTE UND PROGRAMM
DISPOSITIF DE FEUILLETAGE DE DOCUMENTS, PROCÉDÉ POUR TOURNER LES PAGES D'UN DOCUMENT ÉLECTRONIQUE, ET PROGRAMME ASSOCIÉ

(30) Priority: 31.01.2013 JP 2013016849
(43) Date of publication of application: 09.12.2015
(73) Proprietor: NEC CORPORATION, Minato-ku, Tokyo 108-8001 (JP)
(72) Inventor: KINEHARA, Hidetoshi, Kawasaki-shi, Kanagawa 211-8666 (JP)
(74) Representative: Vossius & Partner Patentanwälte Rechtsanwälte mbB
(86) International application number: PCT/JP2014/052229
(87) International publication number: WO 2014/119716

(56) References cited:
- EP-A2- 2 437 152
- WO-A1-2011/143720
- JP-A- H07 319 899
- JP-A- 2001 125 700
- JP-A- 2011 090 575
- JP-A- 2011 186 904
- JP-A- 2012 079 301
- JP-A- 2012 150 566
- US-A1- 2004 183 776
- US-A1- 2012 102 424
- US-A1- 2012 176 385
- US-A1- 2012 182 310

## Description

### TECHNICAL FIELD

This invention relates to a reader for an electronic document, a page turn over method for the electronic document, and a program. More particularly, it relates to a document reader for an electronic document of a style comprising a plurality of pages folded and bound together, a page turn over method for the electronic document, and a program.

### BACKGROUND

Recently, smartphones or tablet terminals, fitted with touch panels, have come into widespread use. Also, electronic documents, such as electronic books or electronic operation manuals, are presented for use with these devices, with which it is possible to turn over pages of the electronic document with the sense or feel similar to that with paper books.

In addition, a variety of proposals have been made to enhance the operability in reading the electronic documents. Patent Literature 1 shows a mobile terminal including a touch panel with which a plurality of points can be simultaneously detected to permit execution of a plurality of different operations. For example, in claim 2, paragraph 0037 and Fig.5 of Patent Literature 1, it is stated that, if a user performs a flick action with his/her N fingers on a screen representing a page of the electronic document, N pages can be turned over. By the flick action, also called a slip or slide action, is meant the manual operation by a user of slipping or sliding his/her N fingers in one direction, as he/she keeps his/her fingers contacted with the screen surface, so as to turn over N pages.

Patent Literature 2 also shows a mobile information device in which, if a user keeps on touching an image simulating a 'thickness of a book', it is possible to turn over pages in succession with a sense of actually turning over multiple pages of a real paper book in succession (paragraph 0082). It is also stated that, in this mobile information device, the page turn over speed can be varied by the user changing his/her screen touching pressure.

### PATENT LITERATURES

PATENT LITERATURE 1: JP-2011-170603A
PATENT LITERATURE 2: JP-2000-163444A

US 2012/176385 A1 relates to a display controller which displays an electronic book and enables a user to perform operations when switching between pages to be displayed.

### SUMMARY

The following analysis is made by the present invention. If, in the mobile terminal, shown in the above mentioned Patent Literature 1, it is attempted to read a specific page of an electronic document, containing many pages, the target page cannot be reached unless a number of flick actions are performed.

In the method shown in Patent Literature 2, it is possible to turn over pages speedily by a user strongly touching the portion of the image simulating the 'thickness of the book'. However, this method suffers a problem that, if the book contains many pages, the user is kept waiting for a long time until the target page is displayed.

The above mentioned problems may arise not only with a small-sized terminal, such as a smartphone or a tablet terminal, but also with a personal computer, in case of reading an electronic book containing many pages.

It is an object of the present invention to provide a document reader having an interface convenient in reading an electronic document containing a number of pages, in particular an extremely large number of pages, a method for turning over the pages of the electronic document, and a program. The present invention is defined by the claims. Dependent claims refer to preferred embodiments.

In one aspect, there is provided a document reader comprising a display means for demonstrating a region representing contents of a page selected by a user of an electronic document of a style composed by a plurality of pages held together and a region which is provided neighboring to the region representing the page contents and which represents the thickness of the plurality of the pages held together, an action detection means for detecting contents of an action on the electronic document performed by specifying an arbitrary point in each of the above mentioned regions, and a display control means for performing a processing of turning over multiple pages in case of carrying out an action of specifying two points, namely an arbitrary position in the region representing the page contents and an arbitrary position in the region representing the thickness of the plurality of the pages held together, so that the two points are specified in succession. The processing of turning over multiple pages is performed up to a page corresponding to the position specified in the region representing the thickness of the plurality of the pages held together.

In a second aspect, there is provided a method for turning over multiple pages of an electronic document of a style composed by a plurality of pages held together, in a document reader including a display means for displaying a region representing contents of a page of the electronic document selected by a user and a region which is provided neighboring to the region representing the page contents and which represents the thickness of the plurality of the pages held together, in which the method comprises the steps of detecting contents of actions performed on the electronic document by specifying at least two points, and performing a processing of turning over multiple pages in case of carrying out an action of specifying two points, namely an arbitrary position in the region representing the page contents and an arbitrary position in the region representing the thickness of the plurality of the pages held together. The processing of turning over multiple pages is performed up to a page corresponding to the position specified in the region representing the thickness of the plurality of the pages held together. The present method is tied up to a particular machine which is a document reader for demonstrating an electronic document composed by a plurality of folded pages held together.

In a third aspect, there is provided a program for causing a computer provided onboard a document reader including a display means for displaying a region representing contents of a page selected by a user of an electronic document of a style composed by a plurality of pages held together and a region which is provided neighboring to the region representing the page contents and which represents the thickness of the plurality of the pages held together, to perform a processing of detecting contents of an action performed on the electronic document by specifying at least two points, and a processing of performing a processing of turning over multiple pages in case of carrying out an action of specifying two points, namely an arbitrary position in the region representing the page contents and an arbitrary position in the region representing the thickness of the plurality of the pages held together. The processing of turning over multiple pages is performed up to a page corresponding to the position specified in the region representing the thickness of the plurality of the pages held together. The present program can be recorded on a computer readable, that is, non-transient, recording medium. That is, the present invention can be implemented as a computer program product.

According to the present invention, there may be provided an operation interface convenient for reading an electronic document composed by a larger number of pages. The invention will be carried out according to the attached independent claims.

### BRIEF DESCRIPTION OF THE DRAWINGS

Fig.1 is a perspective view showing an appearance of a document reader according to an exemplary embodiment 1 of the present invention.
Fig.2 is a functional block diagram, partly shown in a front view, showing the document reader according to the exemplary embodiment 1 of the present invention.
Fig.3 is a front view showing an example of a display screen of the document reader according to the exemplary embodiment 1 of the present invention.
Fig.4 is a flowchart showing the flow of a first style page turn over operation of the document reader according to the exemplary embodiment 1 of the present invention.
Fig.5(a), Fig.5(b) and Fig.5(c) are front views showing the operation flow corresponding to the flowchart shown in Fig.4.
Fig.6 is a flowchart showing the flow of a second style page turn over operation of the document reader according to the exemplary embodiment 1 of the present invention.
Fig.7(a), Fig.7(b) and Fig.7(c) are front views showing the operation flow corresponding to the flowchart shown in Fig.6.
Fig.8 is a functional block diagram, partly shown in a front view, showing a document reader according to an exemplary embodiment 2 of the present invention.
Fig.9 is a flowchart showing a page turn over operation of the document reader according to the exemplary embodiment 2 of the present invention.
Fig.10(a) is a perspective view and Fig.10(b), Fig.10(c) are front views, showing the operation flow corresponding to the flowchart shown in Fig.9.
Fig.11 is a front view showing another example of the display screen of the document reader according to the present invention.
Fig.12 is a front view showing still another example of the display screen of the document reader according to the present invention.

### PREFERRED MODES

A preferred mode of the present invention will now be summarized with reference to the drawings.

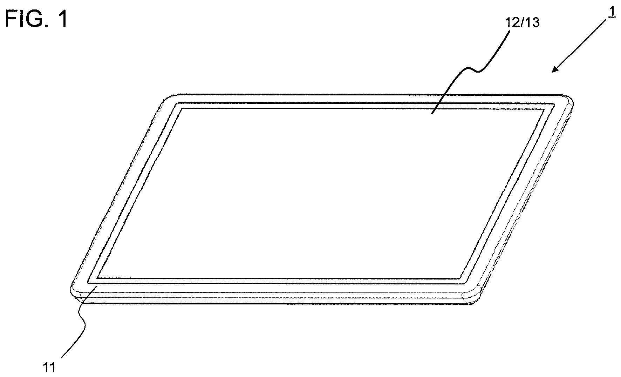

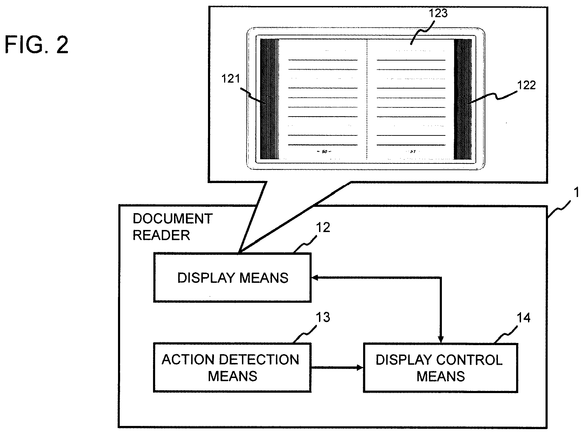

In a preferred mode, the present invention may be implemented by a configuration shown in Fig.1 and Fig.2, including a display means (12 of Fig.2), an action detection means (13 of Fig.2), and a display control means (14 of Fig.2). The display means includes a region (123 of Fig.2) representing the contents of a page(s) selected by a user of an electronic document of a style composed by a plurality of folded pages held together, and regions (121, 122 of Fig.2) provided neighboring to the region representing the page contents to represent the thickness of the plurality of the folded pages. The action detection means detects the contents of actions on the electronic document performed by specifying or pointing to at least two points. The display control means performs, in case a user has performed an action of specifying two points, namely an arbitrary position in the region representing the page contents and an arbitrary position in the region representing the thickness of the folded pages, an operation of turning over multiple pages up to a page corresponding to the specified position in the region representing the thickness of the folded pages.

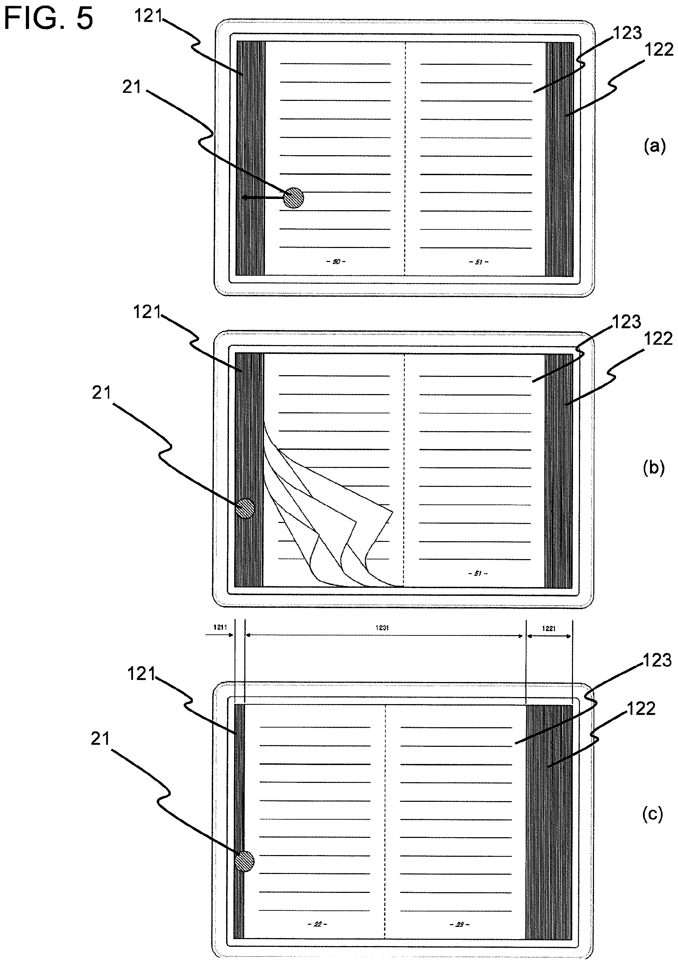

If, for example, the user has performed an action of pointing to an arbitrary position in the region representing the thickness of folded pages (121 of Fig.2) and subsequently pointing to an arbitrary position in the region representing the page contents (123 in Fig.2), the document reader performs an operation of skipping over intermediate pages to represent the page corresponding to the specified position in the region representing the thickness of folded pages, as shown in Fig.5(a) to Fig.5(c).

There is thus provided an operation interface performing an operation proximate to the action of turning over multiple pages of a real paper book.

### [Exemplary Embodiment 1]

An exemplary embodiment 1, in which the present invention is applied to a tablet terminal including a touch panel, will now be described in detail with reference to the drawings. Fig.1 depicts a perspective view showing a document reader according to an exemplary embodiment 1 of the present invention. Referring to Fig.1, there is shown a document reader 1 which is comprised of a housing 11 of a thin thickness and a display mounted on a front surface of the housing and which is provided with a touch panel configured to operate as a display means 12 and as an action detection means 13.

Fig.2 depicts a functional block diagram of the document reader 1 shown in Fig.1. Referring to Fig.2, there is shown a configuration including the display means 12, action detection means 13 and the display control means 14.

Referring to Fig.1, the display means 12 is formed by e.g., a liquid crystal display device, an organic electroluminescence display device (organic EL display device) etc.

The action detection means 13 is formed by a touch sensor and a digitizer which are arranged so as to overlap with the liquid crystal display device or the organic EL display device making up the display means 12. The contents of actions on an electronic document, detected by the action detection means 13 during the time the electronic document is demonstrated on the display means 12, are entered to the display control means 14.

When so requested by a user, the display control means 14 reads out the electronic document of a style comprised of a plurality of pages folded and bound together, and displays the so read out electronic document on the display means 12. It should be noted that the electronic document represented may be an electronic document stored in a memory of a main body part of the document reader 1 or an electronic document received from a server etc. provided on a network via any of a variety of communication means provided on the document reader 1.

By the way, the display control means 14 of the document reader 1, shown in Fig.2, may be implemented by a computer program that causes a computer onboard the document reader 1 to execute the processing by the display control means 14 using the computer's hardware resources. The processing by the display control means 14 will be described herein later in detail.

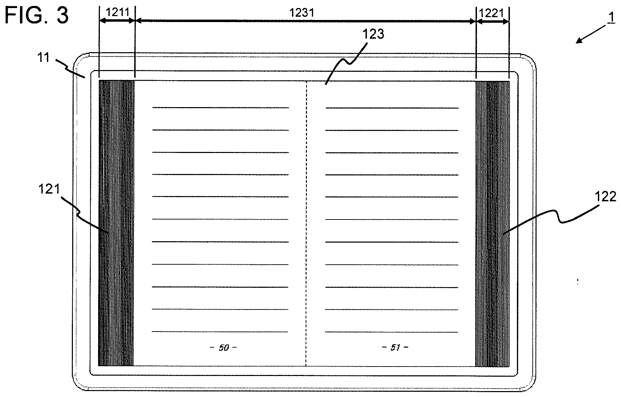

Fig.3 shows an example of a display screen of the document reader according to the subject exemplary embodiment. Referring to Fig.3, the electronic document includes a region 123 in which to display the contents of a page(s) selected by the user and regions 121, 122 on its both sides representing the thickness of a plurality of folded sheets or pages. The regions 121, 122 representing the thickness of the folded pages of the document have variable widths 1211, 1221 corresponding to the numbers of the pages from the beginning page and from the last page, respectively. The sum of the widths 1211, 1221 corresponds to the total number of the pages of the electronic document.

If, in the case of an electronic document bound along the left side and that may be opened on the left side, shown for example in Fig.3, the beginning page is demonstrated in the region 123, the width 1211 of the left side region 121 representing the thickness of folded pages is zero. In a state the last page is represented in the region 123, the width 1221 of the right side region 122 representing the thickness of folded pages is zero. Similarly, if, in the case of an electronic document bound along the right side and that may be opened on the right side, the beginning page is represented in the region 123, the width 1221 of the right side region 122 representing the thickness of folded pages is zero. In a state the last page is represented in the region 123, the width 1211 of the left side region 121 representing the thickness of folded pages is zero. Moreover, if, for example, in the state shown in Fig.3, the user flicks a portion of the region 123 representing the page contents from the right page side towards the left page side, by way of performing a slide action, the page representing state is switched from the state in which pages 50, 51 are opened to a state in which pages 52, 53 are opened. Moreover, in response to this action, the width 1221 of the right side region 122 indicating the thickness of the right side multiple pages becomes smaller by one page, with the width 1211 of the left side region 121 indicating the thickness of the left side multiple pages becoming wider by one page. On the other hand, the width of the region 123 indicating the page contents remains unchanged, with the region 123 moving itself by one page towards right. Hence, the total width of the regions 121, 122 and 123 remains constant at all times.

Next, the page turn over operation, which may be coped with by the document reader of the subject exemplary embodiment, will be described in detail with reference to the drawings. The document reader 1 of the exemplary embodiment 1 of the present invention allows not only the above described page-based page turn over operation, but also the operation of turning over multiple pages either in succession or at a time. In the following, the flow of operations of turning over multiple pages in succession will initially be explained, as a first style page turn over operation, and the flow of operations of turning over multiple pages at a time will then be explained as a second page turn over operation.

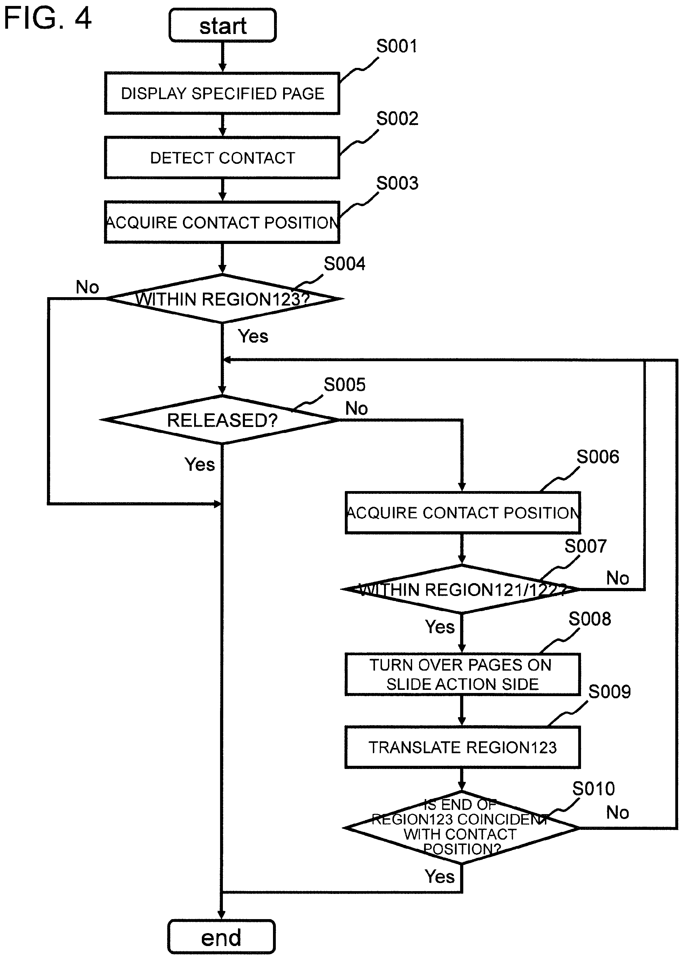

Fig.4 depicts a flowchart showing the flow of the first style page turn over operation of the document reader 1 according to the exemplary embodiment 1 of the present invention. Referring to Fig.4, a page specified by the user is opened (step S001). If the contact of a user's finger or a utensil, such as a touch pen, on the screen surface, is then detected (step S002), the site of such contact is acquired by the action detection means 13 (step S003).

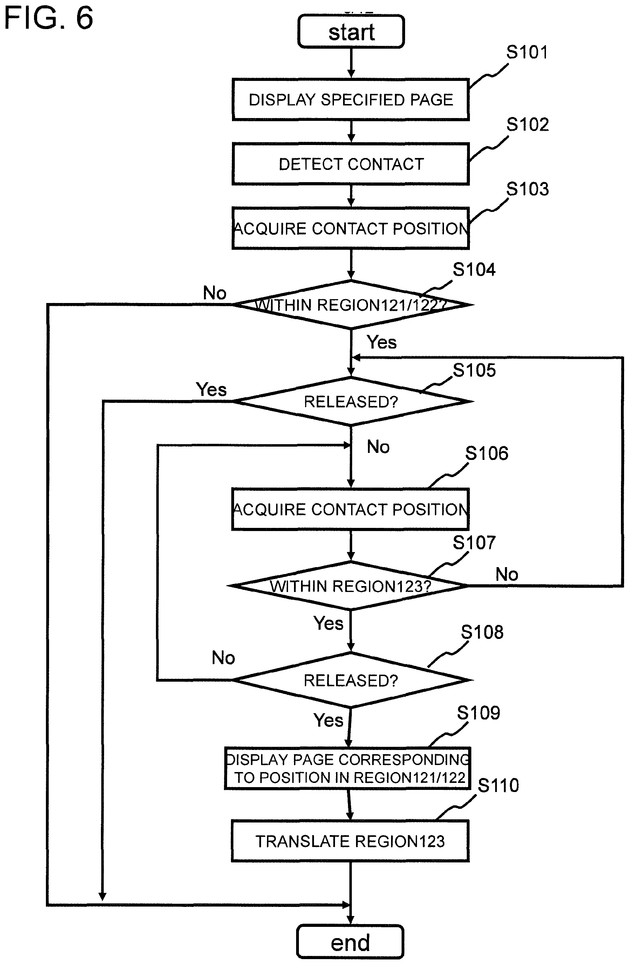

If the contact site acquired is inside the region 123 in which to display the contents of the page(s) selected by the user (Yes of a step S004), the processing which will now be explained is carried out. Note that, if the contact site acquired is outside the region 123 in which to display the contents of the page(s) selected by the user (No of the step S004), processing of the step S104 et seq. of the flowchart of Fig.6 is carried out.

It is here assumed that the user has done an operation of pointing to an arbitrary position in the region 123 as indicated at 21 in Fig.5(a). The document reader 1 then checks to see whether or not the user's finger or the utensil such as touch pen has been released from the above mentioned contact position ('Released?' of a step S005). If it is detected that the user's finger or the utensil such as touch pen has been released from the screen surface (Yes of the step S005), the first style page turn over operation is discontinued at this moment in time and only the processing as if the position pointed to in the region 123 was simply tapped is carried out.

If the user's finger or the utensil such as touch pen has not been released from the screen surface (No of the step S005), the action detection means 13 continues to hold the contact position acquired (step S006).

If the contact position acquired has not reached the regions 121, 122 indicating the thickness of folded pages (No of a step S007), the document reader 1 assumes that the flick or slide action by the user is still going on, and hence returns to the step S005.

If the contact position acquired has entered the regions 121 or 122 representing the thickness of folded pages (Yes of the step S007), the document reader 1 performs the operation of turning over a page of either one of the thickness representing regions 121, 122 where the user has performed the flick or slide action (step S008). The document reader 1 also performs an operation of translating the region 123, representing the contents of the page(s) selected by the user, by one page towards the side where the user' flick action has been performed (step S009).

It is now supposed that the user has pointed to the region 123, representing the contents of the page(s) selected by the user, as shown in Fig.5(a), and then flicked the selected portion of the region 123 in a direction towards the region 121 representing the thickness of the folded pages. In such case, the document reader 1 continues the processing of turning over left-hand side pages one by one, as shown in Fig.5(b), and the processing of translating the region 123 towards left.

The document reader 1 then checks to see whether or not the contact position is coincident with an edge of the as-translated region 123 (step S010). If the contact position is not coincident with the edge of the as-translated region 123 (No of the step S010), the document reader 1 returns to the step S005.

If conversely the contact position is coincident with the edge of the as-translated region 123 (Yes of the step S010), the page turn over operation up to the page specified by the user is taken to have come to a close to terminate processing, as shown in Fig.5(c). Ultimately, the width 1221 of the region 122 becomes wider, and the width 1211 of the region 121 becomes narrower, in an amount corresponding to the number of turned over pages. The region 123 is translated leftwards in a corresponding amount.

As described above, the first style page turn over operation is carried out on the page-by-page basis at a preset speed up to the page corresponding to the position of the region representing the thickness of folded pages 121 contacted by the user. With this first style page turn over operation, it becomes possible to turn over pages by an operation similar to one when the user holding an edge face of the folded pages of a real paper book opened opposite to its bound side shifts his/her finger towards outside little by little by way of turning over multiple pages on the page-by-page basis.

Fig.6 depicts a flowchart showing the flow of the second style page turn over operation for the document reader 1 according to the exemplary embodiment 1 of the present invention. Referring to Fig.6, if, with the user-specified page opened (step S101), contact of the user's finger or a utensil such as a touch pen on the screen surface is detected (step S102), the contact position is acquired by the action detection means 13 (step S103).

If the contact position acquired is inside either one of the regions 121, 122 representing the thickness of the folded pages (Yes of a step S104), the processing which will now be explained is carried out. Note that, if the contact position acquired is outside the regions 121, 122 in which to display the thicknesses of the folded page(s) (No of the step S104), the processing is carried out in accordance with the step S004 et seq. of the flowchart of Fig.4.

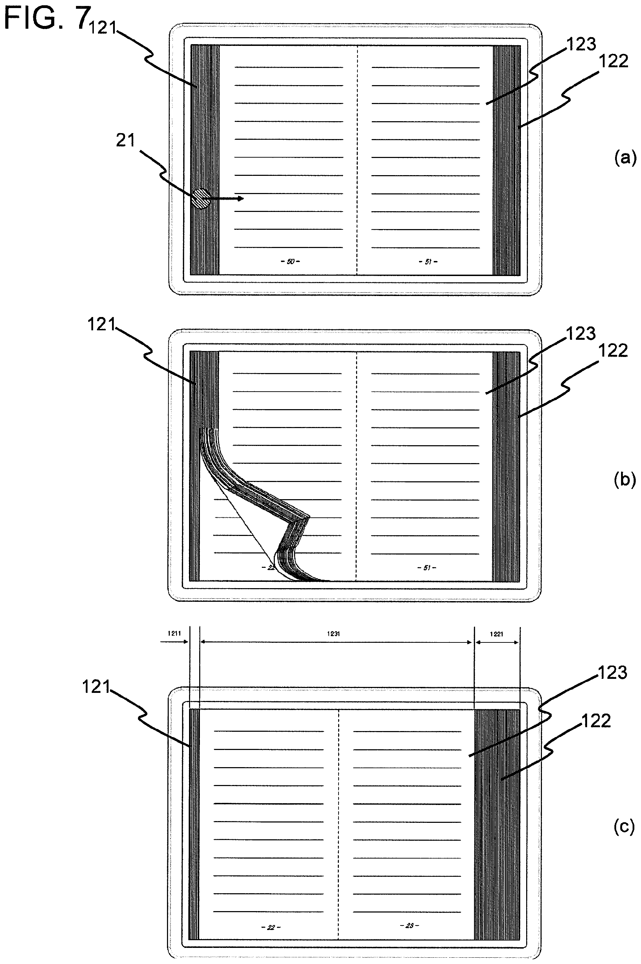

For explanation sake, it is here assumed that an operation of pointing to an arbitrary position of the region 121 representing the thickness of the folded pages has been made as indicated at 21 in Fig.7(a). The document reader 1 then checks to see whether or not the user's finger or the utensil such as touch pen has been released from the contact position ('Released?' in a step S105). If it is detected that the user's finger or the utensil such as touch pen has been released from the contact position (Yes of the step S105), the second style page turn over operation is discontinued at this moment in time and only processing as a tap operation at the position of the region 121 or 122 pointed to is carried out.

If the user's finger or the utensil such as touch pen has not been released from the screen surface (No of the step S105), the action detection means 13 continues to hold the contact position acquired (step S106).

If the contact position acquired has not reached the region 123 representing the contents of the page selected by the user (No of a step S107), the document reader 1 assumes that the flick action by the user is still going on, and accordingly returns to the step S105.

If the contact site acquired as described above has entered the region 123 in which to display the contents of the page(s) selected by the user (Yes of the step S107), the document reader 1 checks to see whether or not the user's finger or the utensil such as touch pen has been released from the screen surface ('Released?' of a step S108). If the user's finger or the utensil such as the touch pen has not been released from the screen surface (No of the step S108), the action detection means 13 continues to hold the contact position acquired (step S106).

If it is detected in the step S108 that the user's finger or the utensil such as the touch pen has been released from the screen surface (Yes of the step S108), the document reader 1 performs processing of turning over multiple pages in a lump (step S109). This lumped page turn over operation is continued up to the page corresponding to the contact position in the thickness representing region 121 or 122 as detected in the step S103 (beginning point of the flick or slide action) as shown in Fig.7(a) and Fig.7(b). The document reader 1 performs processing of translating the region 123, representing the contents of the page(s) selected by the user, in a direction towards whichever one of the regions 121 and 122 where the user's flick movement originated, in an amount corresponding to the number of the pages turned over by the lumped page turn over operation (step S110).

For example, it is now assumed that the user has first pointed to the thickness representing region 121 and then has made a flick or slide action towards the region 123 representing the contents of the page(s) selected by the user, as shown in Fig.7(a). In this case, the document reader 1 performs the processing of turning over multiple pages in a lump, until reaching the page of the position of the thickness representing region 121 specified by the user, and the processing of translating the region 123 towards left, as shown in Fig.7(b) and Fig.7(c). As a result, the width 1221 of the region 122 becomes wider and the width 1211 of the region 121 narrower, with the region 123 shifting towards left, in an amount related to the number of the turned over pages.

According to the second style page turn over operation, described above, it is possible to turn over pages by processing similar to the customary operation of collectively turning over many pages of a paper book at a time as the user inserts his/her index finger between pages on an end face of the paper book opened.

### [Exemplary Embodiment 2]

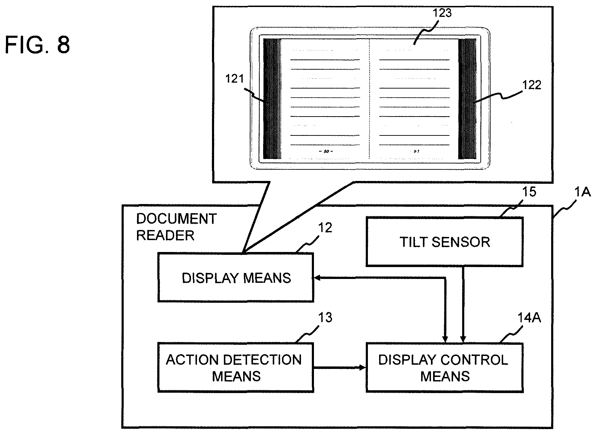

An exemplary embodiment 2 in which an operation of tilting a housing is used in place of the slide action of the above described exemplary embodiment 1 will now be described. Fig.8 depicts a functional block diagram of the document reader, partly shown in a front view, according to an exemplary embodiment 2 of the present invention. The configuration of the subject exemplary embodiment differs from that of the exemplary embodiment 1 in including a tilt sensor 15 as an additional component. Otherwise, the configuration of the subject exemplary embodiment is similar to that of the exemplary embodiment 1, and hence the following description of the subject exemplary embodiment is centered on this point of difference.

The tilt sensor 15 is a sensor configured for detecting the tilt of the housing 11 of a document reader 1A.

The display control means 14 performs a page turn over operation using not only an output of the action detection means 13 but also the tilt of the housing 11 acquired by the tilt sensor 15.

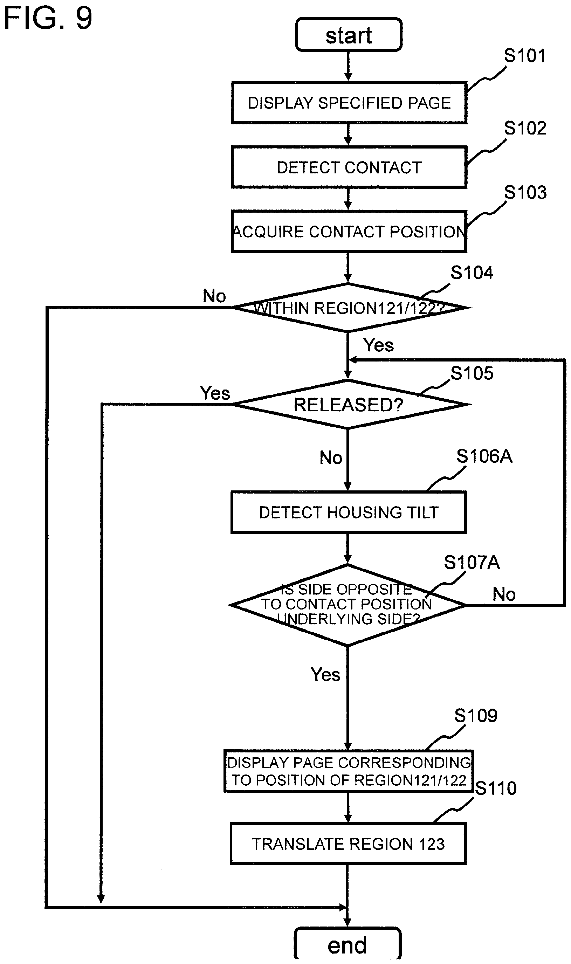

The page turn over operation, coped with by the document reader of the subject exemplary embodiment, will now be explained in detail with reference to the drawings. Fig.9 depicts a flowchart showing the flow of the page turn over operation according to the subject exemplary embodiment 2 in which the tilt of the housing of the document reader 1A is used as an instruction from a user. Referring to Fig.9, a page specified by the user is opened (step S101). If the contact of a user's finger or a utensil, such as touch pen, on the screen surface, is then detected (step S102), the position of such contact is acquired by the action detection means 13 (step S103).

If the contact position acquired is either one of the thickness representing regions 121 and 122 (Yes of a step S104), the operation which will now be explained is carried out. Note that, if the contact position acquired is outside the region 121 or 122 in which to display the thickness of the folded pages as selected by the user (No of the step S004), the step S004 et seq. of the flowchart of Fig.4, explained in connection with the exemplary embodiment 1, is carried out.

It is now assumed that an action of pointing to an arbitrary position in the thickness representing region 121 has been made, as indicated at 21 of Fig.7(a). The document reader 1A then checks to see whether or not the user's finger or the utensil, such as touch pen, has moved away from the contact position ('Released? in a step S105). If it has been detected that the user's finger or the utensil, such as touch pen, has moved away from the screen surface (Yes of the step S105), the page turn over operation is discontinued at that moment in time and only processing as a tap operation at the position of the region 121 or 122 pointed to is carried out.

If conversely the user's finger or the utensil, such as touch pen, has not moved away from the screen surface (No of the step 105), only acquisition of the information concerning the tilt of the housing 11 by the tilt sensor 15 is continued (step S106A).

If the tilt of the housing such that an edge thereof opposite to its edge touched by the user's finger or the touch pen underlies the edge touched has not been detected by the tilt sensor 15 (No of a step 107A), the document reader 1A assumes that the explicit page turn over action by a user is not going on, and returns to the step S105.

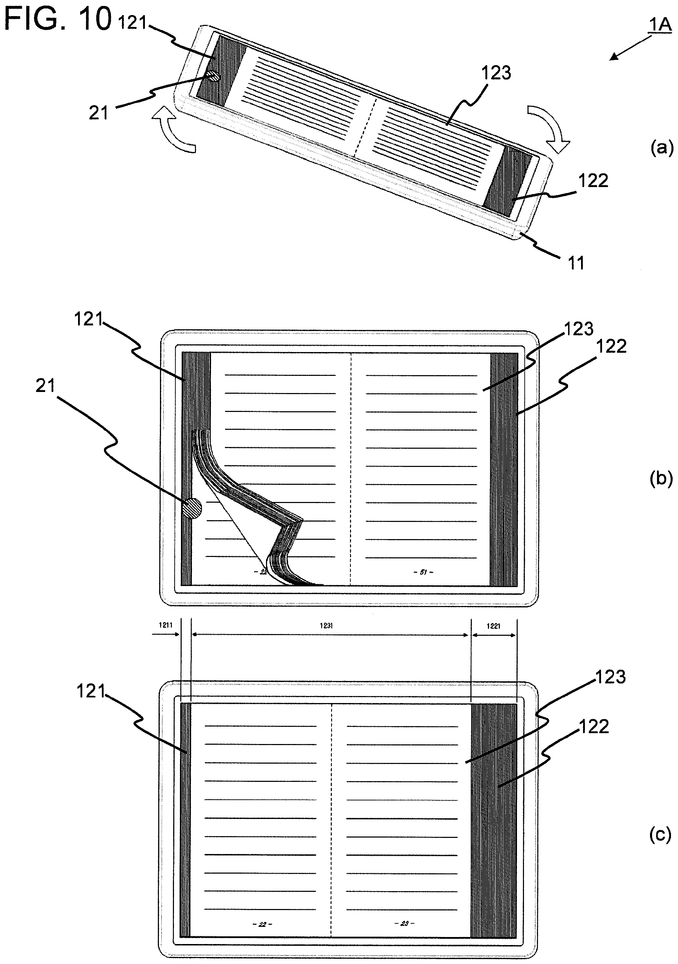

If conversely the tilt of the housing such that the edge thereof opposite to its edge touched by the user's finger or the touch pen underlies the edge touched has been detected (Yes of the step 107A), the document reader 1A performs a lumped page turn over operation of turning over multiple pages in a lump, until reaching a page corresponding to the position within the region 121 or 122 as detected in the step S103, as shown in Fig.10(b) and 10(c) (step S109). This position is the beginning point of the slide action. The document reader 1A also performs the processing of translating the region 123, representing the contents of the page(s) selected by the user, in an amount corresponding to the number of the turned over pages, in a direction towards the region 121 or 122 from which originated the slide action (step S110).

For example, it is assumed that an operation has been made of pointing to the thickness representing region 121 and raising the edge of the housing disposed towards the region 121 while lowering its opposite side edge disposed towards the region 122, as shown in Fig.10(a). In this case, the document reader 1A performs the operation of collectively turning over multiple pages of the thickness representing region 121, as instructed by the user, and the operation of translating the region 123 towards left, as shown in Fig.10(b) and Fig.10(c). As a result, the width 1221 of the region 122 becomes broader, and the width 1211 of the region 121 narrower, in an amount corresponding to the number of the turned over pages. The region 123 is also correspondingly translated towards left.

In the subject exemplary embodiment, described above, it is possible to turn over pages by an operation of pointing to a desired page in the thickness representing region 121 and tilting the housing 11. This operation is tantamount to an operation of a user inserting his/her finger between folded pages on an edge face of a real paper book opened and tilting the book to turn over multiple pages at a time.

As may be seen from the above described exemplary embodiments 1 and 2 of the present invention, the operation in reading the electronic document, in particular, the operation in turning over its many pages, may be simplified. Moreover, it may be seen from the widths of the thickness representing regions 121, 122 which position in the entire electronic document is assumed by the page(s) currently represented.

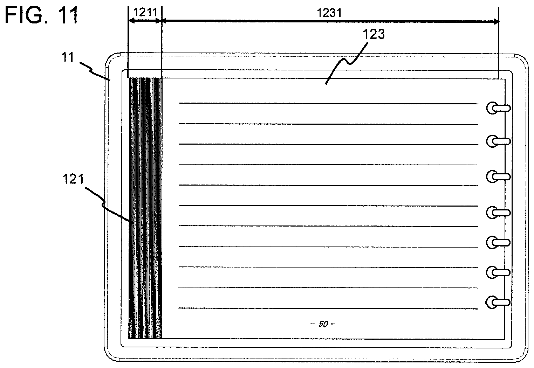

Although certain preferred exemplary embodiments of the present invention are shown and described above, the present invention is not to be restricted to these particular modes, such that further changes, substitutions or adjustments may be made within the range not departing from the basic technical concept of the invention. For example, in the above described exemplary embodiments, the electronic document is displayed with its two pages opened. However, such page display configuration in which the thickness representing region 121 is provided only on one side, as shown in Fig.11, may also be used to enable a similar operation to be performed. It should be noted that, in this case, a page returning processing cannot be accomplished with the first and second styles of the page turn over operation. However, it is then only sufficient that prescription for a page returning operation is separately provided, or a page recycle electronic document configuration is used in which a first page is displayed on turning over the last page.

Though not shown or described in the above exemplary embodiments, it is also possible to provide a device for setting up oscillations, such as a vibrator, in the document reader. If such device for setting up oscillations is provided and used for setting up oscillations when performing the page turn over operation, a user may perceive that the page is being turned over by dint of his/her tactile sense.

In the above described exemplary embodiment 1, there is made no reference to the speed of the slide movement. It is however possible to change the speed of the page turn over operation in relation to the speed of the slide movement.

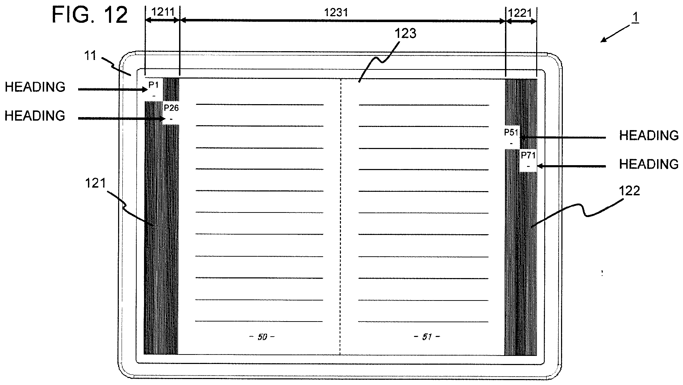

The thickness representing regions 121, 122 can be marked with colors that are changed from one group of consecutive pages to another, or headers and so on can be inserted for every preset number of consecutive pages, as shown in Fig.12. By so doing, it is possible to assure facilitated selection of a plurality of pages or to enhance ease in reading the document.

In the above described exemplary embodiments, the present invention is applied to a terminal of a tablet configuration provided with a touch panel. However, the present invention may be applied to a personal computer, a book reader terminal or a game machine of the position fixed configuration. In this case, a touch sensor may be used as in the above described exemplary embodiments. However, a pointing device, such as a tablet device, a mouse or a cross-key, and a button, may also be used, and selection of the regions 121, 122 representing the thickness of folded pages or the region 123 demonstrating the page contents may be coped with by a dragging action equivalent to the above mentioned slide action. A tilt sensor or an acceleration sensor, mounted onboard a controller of the tablet device, mouse or the game machine, may also be used as the tilt sensor.

### EXPLANATION OF SYMBOLS

- 1, 1A: document readers
- 11: housing
- 12: display means
- 13: action detection means
- 14: display control means
- 15: tilt sensor
- 21: position specified by a user
- 121, 122: regions representing the thickness of folded pages
- 123: region representing page contents
- 1211, 1221, 1231: widths

## Claims

1. A document reader comprising:
display means (12) for displaying a region representing contents of a page selected by a user of an electronic document of a style composed by a plurality of pages held together, and a region (121, 122) which is provided neighboring to the region (123) representing the page contents and which represents the thickness of the plurality of the pages held together;
action detection means (13) for detecting contents of an action on the electronic document (121, 122, 123) performed by specifying an arbitrary point in each of the regions;
display control means (14) for performing, in case an action of specifying two points, namely an arbitrary position in the region representing the page contents and an arbitrary position in the region representing the thickness of the plurality of the pages held together, is carried out by a user so that the two points are specified in succession, a processing of turning over multiple pages up to a page corresponding to the position specified in the region representing the thickness of the plurality of the pages held together; and
a sensor (15) that detects an operation of tilting the electronic document represented by the display means;
wherein,
the display control means performs, in case an operation of specifying the arbitrary position of the region representing the thickness of the plurality of the pages held together and an operation of tilting the electronic document so that the region representing the thickness of the plurality of the pages held together will overlie the region representing the page contents, are performed, a processing of turning over multiple pages at a time up to the specified position in the region representing the thickness of the plurality of the pages held together,
in place of performing, in case the action of specifying the two points, namely the arbitrary position in the region representing the page contents and the arbitrary position in the region representing the thickness of the plurality of the pages held together, is carried out by a user so that the two points are specified in succession, the operation of turning over multiple pages up to a page corresponding to the position specified in the region representing the thickness of the plurality of the pages held together.

2. The document reader (1) according to claim 1, wherein,
the display control means are adapted to change a width of the region representing the thickness of the plurality of folded pages each time a page is turned over.

3. The document reader according to claim 1 or 2, wherein,
in case the display control means specify the arbitrary position in the region (123) representing the page contents and subsequently specify the arbitrary position in the region (121, 122) representing the thickness of the plurality of folded pages, the display control means performs processing of turning over multiple pages in sequence from a page currently demonstrated to a page corresponding to the specified position in the region representing the thickness of the plurality of folded pages.

4. The document reader according to any one of claims 1 to 3, wherein,
in case the display control mean specifies the arbitrary position in the region representing the thickness of the plurality of folded pages and subsequently specifies the region representing the contents of the page, the display control means performs processing of collectively turning over multiple pages at a time up to a page corresponding to the specified position in the region representing the thickness of the plurality of the folded pages.

5. The document reader according to any one of claims 1 to 4, wherein,
the action detection means is constituted by a touch sensor (13) and wherein,
the two points specified by the user are detected by a start point and an end point of a slide action on the screen surface representing document data of a style composed by the plurality of folded pages held together.

6. The document reader according to any one of claims 1 to 5, wherein,
the region representing the thickness of the plurality of the pages held together is differently colored or marked from one set of consecutive pages to another.

7. A method for turning over multiple pages of an electronic document of a style composed by a plurality of pages held together, in a document reader including display means for displaying a region representing contents of a page selected by a user and a region which is provided neighboring to the region representing the page contents and which represents the thickness of the plurality of the pages held together; the method comprising the steps of detecting contents of actions performed on the electronic document by specifying an arbitrary point in each of the regions; and
performing, in case an action of specifying two points, namely an arbitrary position in the region representing the page contents and an arbitrary position in the region representing the thickness of the plurality of the pages held together, is carried out by a user so that the two points are specified in succession, a processing of turning over multiple pages up to a page corresponding to the position specified in the region representing the thickness of the plurality of the pages held together,
wherein the document reader further comprises a sensor that detects an operation of tilting the electronic document represented by the display means; and
performing, in case an operation of specifying the arbitrary position of the region representing the thickness of the plurality of the pages held together and an operation of tilting the electronic document so that the region representing the thickness of the plurality of the pages held together will overlie the region representing the page contents, are performed, a processing of turning over multiple pages at a time up to the specified position in the region representing the thickness of the plurality of the pages held together,
in place of performing, in case the action of specifying the two points, namely the arbitrary position in the region representing the page contents and the arbitrary position in the region representing the thickness of the plurality of the pages held together, is carried out by a user so that the two points are specified in succession, the operation of turning over multiple pages up to a page corresponding to the position specified in the region representing the thickness of the plurality of the pages held together.

8. A computer program comprising code means that when executed by a data processing machine carries out each of the steps of the method of claim 7.

## Patentansprüche

1. Dokumentenleser, der aufweist:
eine Anzeigeeinrichtung (12) zum Anzeigen eines Bereichs, der Inhalte einer Seite darstellt, die von einem Benutzer eines elektronischen Dokuments mit einer Gestaltung ausgewählt wird, die aus mehreren zusammengehaltenen Seiten zusammengesetzt ist, und eines Bereichs (121, 122), der benachbart zu dem Bereich (123), der die Seiteninhalte darstellt, bereitgestellt wird und der die Dicke der mehreren zusammengehaltenen Seiten darstellt;
eine Aktionserfassungseinrichtung (13) zum Erfassen von Inhalten einer Aktion für das elektronische Dokument (121, 122, 123), die durchgeführt wird, indem ein beliebiger Punkt in jedem der Bereiche spezifiziert wird;
eine Anzeigesteuerungseinrichtung (14), um in dem Fall, dass eine Aktion zum Spezifizieren von zwei Punkten, nämlich einer beliebigen Position in dem Bereich, der die Seiteninhalte darstellt, und einer beliebigen Position in dem Bereich, der die Dicke der mehreren zusammengehaltenen Seiten darstellt, von einem Benutzer ausgeführt wird, so dass die zwei Punkte aufeinanderfolgend spezifiziert werden, eine Verarbeitung zum Umblättern mehrerer Seiten bis zu einer Seite, die der Position entspricht, die in dem Bereich, der die Dicke der mehreren zusammengehaltenen Seiten darstellt, spezifiziert wird, durchzuführen; und
einen Sensor (15), der eine Bedienung zum Kippen des von der Anzeigeeinrichtung dargestellten elektronischen Dokuments erfasst;
wobei
die Anzeigesteuerungseinrichtung in dem Fall, dass eine Bedienung zum Spezifizieren der beliebigen Position des Bereichs, der die Dicke der mehreren zusammengehaltenen Seiten darstellt, und eine Bedienung zum Kippen des elektronischen Dokuments durchgeführt wird, so dass der Bereich, der die Dicke der mehreren zusammengehaltenen Seiten darstellt, den Bereich, der die Seiteninhalte darstellt, überlagert, eine Verarbeitung zum gleichzeitigen Umblättern mehrerer Seiten bis zu der spezifizierten Position in dem Bereich, der die Dickenrichtung der mehreren zusammengehaltenen Seiten darstellt, durchführt,
stattdessen in dem Fall, dass die Aktion zum Spezifizieren der zwei Punkte, nämlich der beliebigen Position in dem Bereich, der die Seiteninhalte darstellt, und der beliebigen Position in dem Bereich, der die Dicke der mehreren zusammengehaltenen Seiten darstellt, von einem Benutzer ausgeführt wird, so dass die zwei Punkte aufeinanderfolgend spezifiziert werden, die Bedienung zum Umblättern mehrerer Seiten bis zu einer Seite, die der Position entspricht, die in dem Bereich spezifiziert wird, der die Dicke der mehreren zusammengehaltenen Seiten darstellt, durchgeführt wird.

2. Dokumentenleser (1) nach Anspruch 1, wobei die Anzeigesteuerungseinrichtung geeignet ist, eine Breite des Bereichs, der die Dicke der mehreren gefalteten Seiten darstellt, jedes Mal, wenn eine Seite umgeblättert wird, zu ändern.

3. Dokumentenleser nach Anspruch 1 oder 2, wobei
die Anzeigesteuerungseinrichtung in dem Fall, in dem die Anzeigesteuerungseinrichtung die beliebige Position in dem Bereich (123), der die Seiteninhalte darstellt, spezifiziert und anschließend die beliebige Position in dem Bereich (121, 122), der die Dicke der mehreren gefalteten Seiten darstellt, spezifiziert, die Verarbeitung zum Umblättern mehrerer Seiten in Folge von einer aktuell gezeigten Seite zu einer Seite, die der spezifizierten Position in dem Bereich, der die Dicke der mehreren gefalteten Seiten darstellt, entspricht, durchführt.

4. Dokumentenleser nach einem der Ansprüche 1 bis 3, wobei
die Anzeigesteuerungseinheit in dem Fall, in dem die Anzeigesteuerungseinrichtung die beliebige Position in dem Bereich, der die Dicke der mehreren gefalteten Seiten darstellt, spezifiziert und anschließend den Bereich, der die Inhalte der Seite darstellt, spezifiziert, die Verarbeitung zum gleichzeitigen gemeinsamen Umblättern mehrerer Seiten bis zu einer Seite, die der spezifizierten Position in dem Bereich entspricht, der die Dicke der mehreren gefalteten Seiten darstellt, durchführt.

5. Dokumentenleser nach einem der Ansprüche 1 bis 4,
wobei die Aktionserfassungseinrichtung durch einen Berührungssensor (13) gebildet ist, und
wobei die von dem Benutzer spezifizierten zwei Punkte durch einen Anfangspunkt und einen Endpunkt einer Schiebeaktion auf der Bildschirmoberfläche erfasst werden, die Dokumentdaten mit einer Gestaltung darstellt, die aus den mehreren zusammengehaltenen gefalteten Seiten zusammengesetzt ist.

6. Dokumentenleser nach einem der Ansprüche 1 bis 5, wobei
der Bereich, der die Dicke der mehreren zusammengehaltenen Seiten darstellt, von einem Satz aufeinanderfolgender Seiten zu einem anderen unterschiedlich gefärbt oder markiert ist.

7. Verfahren zum Umblättern mehrerer Seiten eines elektronischen Dokuments mit einer Gestaltung, die aus mehreren zusammengehaltenen Seiten zusammengesetzt ist, in einem Dokumentenleser, der eine Anzeigeeinrichtung zum Anzeigen eines Bereichs, der Inhalte einer Seite darstellt, die von einem Benutzer ausgewählt werden, und eines Bereichs, der benachbart zu dem Bereich, der die Seiteninhalte darstellt und der die Dicke der mehreren zusammengehaltenen Seiten darstellt, umfasst;
wobei das Verfahren die Schritte des Erfassens von Inhalten von Aktionen, die auf dem elektronischen Dokument ausgeführt werden, durch Spezifizieren eines beliebigen Punkts in jedem der Bereiche umfasst; und
in dem Fall einer Aktion zum Spezifizieren von zwei Punkten, nämlich einer beliebigen Position in dem Bereich, der die Seiteninhalte darstellt, und einer beliebigen Position in dem Bereich, der die Dicke der mehreren zusammengehaltenen Seiten darstellt, die von einem Benutzer ausgeführt wird, so dass die zwei Punkte aufeinanderfolgend spezifiziert werden, Durchführen einer Verarbeitung zum Umblättern über mehrere Seiten bis zu einer Seite, die der Position entspricht, die in dem Bereich, der die Dicke der mehreren zusammengehaltenen Seiten darstellt, spezifiziert wird,
wobei der Dokumentenleser ferner einen Sensor aufweist, der eine Bedienung zum Kippen des von der Anzeigeeinrichtung dargestellten elektronischen Dokuments erfasst; und
in dem Fall, dass eine Bedienung zum Spezifizieren der beliebigen Position des Bereichs, der die Dicke der mehreren zusammengehaltenen Seiten darstellt, und eine Bedienung zum Kippen des elektronischen Dokuments durchgeführt wird, so dass der Bereich, der die Dicke der mehreren zusammengehaltenen Seiten darstellt, den Bereich, der die Seiteninhalte darstellt überlagert, Durchführen einer Verarbeitung zum gleichzeitigen Umblättern mehrerer Seiten bis zu der spezifizierten Position in dem Bereich, der die Dickenrichtung der mehreren zusammengehaltenen Seiten darstellt,
stattdessen in dem Fall, dass die Aktion zum Spezifizieren der zwei Punkte, nämlich der beliebigen Position in dem Bereich, der die Seiteninhalte darstellt, und der beliebigen Position in dem Bereich, der die Dicke der mehreren zusammengehaltenen Seiten darstellt, von einem Benutzer ausgeführt wird, so dass die zwei Punkte aufeinanderfolgend spezifiziert werden, die Bedienung zum Umblättern mehrerer Seiten bis zu einer Seite, die der Position entspricht, die in dem Bereich spezifiziert wird, der die Dicke der mehreren zusammengehaltenen Seiten darstellt, durchgeführt wird.

8. Computerprogramm, das Codeeinrichtungen aufweist, die, wenn sie von einer Datenverarbeitungsvorrichtung ausgeführt werden, jeden der Schritte des Verfahrens von Anspruch 7 ausführen.

## Revendications

1. Lecteur de documents comprenant :
un moyen d'affichage (12) pour afficher une région représentant des contenus d'une page sélectionnée par un utilisateur d'un document électronique d'un style composé par une pluralité de pages maintenues ensemble, et une région (121, 122) qui est prévue avoisinant la région (123) représentant les contenus de page et qui représente l'épaisseur de la pluralité de pages maintenues ensemble ;
un moyen de détection d'action (13) pour détecter des contenus d'une action sur le document électronique (121, 122, 123) réalisée en spécifiant un point arbitraire dans chacune des régions ;
un moyen de commande d'affichage (14) pour réaliser, dans le cas où une action de spécification de deux points, à savoir une position arbitraire dans la région représentant les contenus de page et une position arbitraire dans la région représentant l'épaisseur de la pluralité des pages maintenues ensemble, est mise en oeuvre par un utilisateur de sorte que les deux points soient successivement spécifiés, un traitement consistant à tourner de multiples pages jusqu'à une page correspondant à la position spécifiée dans la région représentant l'épaisseur de la pluralité des pages maintenues ensemble ; et
un capteur (15) qui détecte une opération d'inclinaison du document électronique représenté par le moyen d'affichage ;
dans lequel,
le moyen de commande d'affichage réalise, dans le cas où une opération de spécification de la position arbitraire de la région représentant l'épaisseur de la pluralité des pages maintenues ensemble et une opération d'inclinaison du document électronique de sorte que la région représentant l'épaisseur de la pluralité des pages maintenues ensemble recouvre la région représentant les contenus de page, sont réalisées, un traitement consistant à tourner de multiples pages en une seule fois jusqu'à la position spécifiée dans la région représentant l'épaisseur de la pluralité des pages maintenues ensemble,
au lieu de réaliser, dans le cas où l'action de spécification des deux points, à savoir la position arbitraire dans la région représentant les contenus de page et la position arbitraire dans la région représentant l'épaisseur de la pluralité des pages maintenues ensemble, est mise en oeuvre par un utilisateur de sorte que les deux points soient successivement spécifiés, l'opération consistant à tourner de multiples pages jusqu'à une page correspondant à la position spécifiée dans la région représentant l'épaisseur de la pluralité des pages maintenues ensemble.

2. Lecteur de documents (1) selon la revendication 1, dans lequel,
les moyens de commande d'affichage sont conçus pour modifier une largeur de la région représentant l'épaisseur de la pluralité de pages pliées à chaque fois qu'une page est tournée.

3. Lecteur de documents selon la revendication 1 ou 2, dans lequel,
dans le cas où les moyens de commande d'affichage spécifient la position arbitraire dans la région (123) représentant les contenus de page et spécifient ensuite la position arbitraire dans la région (121, 122) représentant l'épaisseur de la pluralité de pages pliées, le moyen de commande d'affichage réalise un traitement consistant à tourner de multiples pages en séquence à partir d'une page actuellement montrée jusqu'à une page correspondant à la position spécifiée dans la région représentant l'épaisseur de la pluralité de pages pliées.

4. Lecteur de documents selon l'une quelconque des revendications 1 à 3, dans lequel,
dans le cas où le moyen de commande d'affichage spécifie la position arbitraire dans la région représentant l'épaisseur de la pluralité de pages pliées et spécifie ensuite la région représentant les contenus de la page, le moyen de commande d'affichage réalise un traitement consistant à tourner collectivement de multiples pages en une seule fois jusqu'à une page correspondant à la position spécifiée dans la région représentant l'épaisseur de la pluralité de pages pliées.

5. Lecteur de documents selon l'une quelconque des revendications 1 à 4, dans lequel,
le moyen de détection d'action est constitué par un capteur tactile (13) et dans lequel,
les deux points spécifiés par l'utilisateur sont détectés par un point de départ et un point de fin d'une action de glisse à la surface d'écran représentant une donnée de document d'un style composé par la pluralité de pages pliées maintenues ensemble.

6. Lecteur de documents selon l'une quelconque des revendications 1 à 5, dans lequel,
la région représentant l'épaisseur de la pluralité des pages maintenues ensemble est colorée ou marquée différemment d'un ensemble de pages consécutives à un autre.

7. Procédé consistant à tourner de multiples pages d'un document électronique d'un style composé par une pluralité de pages maintenues ensemble, dans un lecteur de documents incluant un moyen d'affichage pour afficher une région représentant des contenus d'une page sélectionnée par un utilisateur et une région qui est prévue avoisinant la région représentant les contenus de page et qui représente l'épaisseur de la pluralité des pages maintenues ensemble ; le procédé comprenant les étapes de détection de contenus d'actions réalisées sur le document électronique en spécifiant un point arbitraire dans chacune des régions ; et
de réalisation, dans le cas où une action de spécification de deux points, à savoir une position arbitraire dans la région représentant les contenus de page et une position arbitraire dans la région représentant l'épaisseur de la pluralité des pages maintenues ensemble, est mise en oeuvre par un utilisateur de sorte que les deux points soient successivement spécifiés, d'un traitement consistant à tourner de multiples pages jusqu'à une page correspondant à la position spécifiée dans la région représentant l'épaisseur de la pluralité des pages maintenues ensemble,
dans lequel le lecteur de documents comprend en outre un capteur qui détecte une opération d'inclinaison du document électronique représenté par le moyen d'affichage ; et
de réalisation, dans le cas où une opération de spécification de la position arbitraire de la région représentant l'épaisseur de la pluralité des pages maintenues ensemble et une opération d'inclinaison du document électronique de sorte que la région représentant l'épaisseur de la pluralité des pages maintenues ensemble recouvre la région représentant les contenus de page, sont réalisées, d'un traitement consistant à tourner de multiples pages en une seule fois jusqu'à la position spécifiée dans la région représentant l'épaisseur de la pluralité des pages maintenues ensemble,
au lieu de réalisation, dans le cas où l'action de spécification des deux points, à savoir la position arbitraire dans la région représentant les contenus de page et la position arbitraire dans la région représentant l'épaisseur de la pluralité des pages maintenues ensemble, est mise en oeuvre par un utilisateur de sorte que les deux points soient successivement spécifiés, l'opération consistant à tourner de multiples pages jusqu'à une page correspondant à la position spécifiée dans la région représentant l'épaisseur de la pluralité des pages maintenues ensemble.

8. Programme d'ordinateur comprenant un moyen de codage qui lorsqu'exécuté par une machine de traitement de données met en oeuvre chacune des étapes du procédé selon la revendication 7.
